# EUROPEAN PATENT APPLICATION

(11) **EP 4 811 681 A1**
(43) Date of publication of application: **23.09.2026**
(21) Application number: 25382262.1
(22) Date of filing: 20.03.2025
(51) Int. Cl.: H04B 10/112

(54) **TRANSCEIVER AND METHOD FOR FREE-SPACE OPTICAL COMMUNICATIONS**

(71) Applicant: Fyla Laser, S.L., 46980 Paterna (Valencia) (ES)
(72) Inventor: ROSSES MONGE, JOHN I., 46980 PATERNA (VALENCIA) (ES); MARTÍNEZ GARCÍA, ANDRÉS, 46980 PATERNA (VALENCIA) (ES); ROTA RODRIGO, SERGIO, 46980 PATERNA (VALENCIA) (ES); PÉREZ MILLÁN, PERE, 46980 PATERNA (VALENCIA) (ES)
(74) Representative: González Poveda, Sara

(57) **Abstract**

A transceiver for free-space optical communications, comprising a pulse generator (2) and a receiver (3), wherein the pulse generator (2) is configured to generate optical pulses and comprises: a pulse source (5) configured to generate seed optical pulses; a stretcher (6) connected to the pulse source (5) and configured to receive the seed optical pulses and increase their duration to thereby stretch the pulses; a preamplifier (7) connected to the stretcher (6) and configured to receive the stretched pulses and increase their power to thereby pre-amplifying the pulses; a modulator (8) connected to the preamplifier (7) and configured to receive the pre-amplified pulses and modulate at least one of them to thereby produce a modulated pulse train; an amplifier (9) connected to the modulator (8) and configured to receive the modulated pulse train and increase the power of the modulated pulse train. Also, a method.

## Description

### TECHNICAL FIELD

The present disclosure relates to a transceiver for free-space optical communications. The present disclosure also relates to a system for free-space optical communications. Furthermore, the present disclosure relates to a method for free-space optical communications. The free-space optical communications may be telecommunications involving the transmission of optical signals through the atmosphere, space, or water.

### STATE OF THE ART

There are known conventional transceivers and related methods and systems for free-space optical (FSO) communications, also known as optical wireless communications (OWC) or wireless laser communications (WLC), among other terms, which involve the transmission of optical signals through free-space, and the subsequent detection of the transmitted optical signals, wherein "free-space" may be the earth's atmosphere, or the space's vacuum, or the sea or another type of terrestrial water body, or combinations thereof. The transceiver serves the purpose of both emitting optical signals and detecting optical signals, so that optical communication can be established between two transceivers which are located at two corresponding locations, wherein each transceiver transmits to the other transceiver corresponding optical signals, and receives the optical signals emitted by the other transceiver. The optical communication established between the two transceivers is often referred to as "optical link" or simply "link". Depending on whether the transceivers are at the ground, the air, the space or the sea, the corresponding link between them may be accordingly named for indicating the type of location wherein each transceiver is. For example, the link may be a ground-ground link meaning that both transceivers are on corresponding ground locations, or may be a ground-air link meaning that one of the transceivers is on the ground and the other is at the air, or may be a ground-space link meaning that one transceiver is on the ground and the other is in the space, or may be a space-space link meaning that both transceivers are in space, etc. Moreover, typically the two optical transceivers are separated from each other by a large distance. Hence, in optical communications, the optical signal, which is usually a laser light signal generated by a laser of the transceiver, must typically travel through free-space over a long distance, and during the signals travel the optical intensity of the signal may drop significantly due to various effects, such as for example due to attenuation, dispersion and atmospheric turbulence, snow, rain or any other atmospheric condition that may cause light scattering. Consequently, the optical power of the optical signal at the location at which the signal is detected will typically be smaller compared to the optical power at the location from which the signal is emitted, and this may hinder the detection of the optical signal. Moreover, ambient light may also hinder the detection of the optical signal at the latter's destination.

For the above reasons, the optical power of the optical signal at the location from which the signal is emitted should preferably be high for ensuring the correct detection of the signal at the destination. Hence, although both continuous wave (CW) lasers and pulsed lasers may be used for the generation of the optical signals used in FSO communications, it is known that the use of pulsed or ultra-short pulse lasers (USPLs), also known as ultrafast lasers (UFLs) or ultrafast pulse lasers (UFPLs), may be particularly advantageous in FSO communications because the pulses generated by these lasers may exhibit high peak powers that may facilitate their detection. Nevertheless, in the case of conventional USPL-based FSO systems, when the pulses emitted by the systems propagate through a dispersive medium like the atmosphere, the effect of dispersion on the pulses by the dispersive medium can result to a significant temporal stretching of the propagated pulses, and consequently the peak power of the pulses may be reduced significantly, and this may be detrimental to the performance of the overall communications system. This problem which is caused by the dispersion of the pulses by the dispersion medium, may be referred to as "dispersion problem". The dispersion problem may in principle be addressed, at least to some extent, by the use of pulses which apart from exhibiting high-peak powers, they also exhibit a narrow spectral linewidth so that the pulses' temporal stretching by the dispersive medium is reduced. However, in practice many of the conventional pulsed- or USPL-based FSO systems still fail to address the dispersion problem because they are not able to generate pulses which have both high peak powers and narrow spectral linewidths. Hence, there is a need for solving this problem.

### DESCRIPTION OF THE INVENTION

The present invention overcomes the above problem because it may provide for a way for creating reliable and practical FSO communications. In particular, the present invention provides for a transceiver and a related method for FSO communications, that allow for the generation of pulses which may exhibit both high peak powers and narrow spectral linewidths. Moreover, the present invention may advantageously be easy to implement at large scale. Also, the present invention may advantageously be utilized for the establishment of FSO communications which are easy to maintain and operate in a cost-effective manner.

The invention in a first aspect concerns a transceiver for free-space optical communications, comprising a pulse generator and a receiver, wherein the pulse generator is configured to generate optical pulses and comprises: a pulse source configured to generate seed optical pulses; a stretcher connected to the pulse source and configured to receive the seed optical pulses and increase their duration to thereby stretch the pulses; a preamplifier connected to the stretcher and configured to receive the stretched pulses and increase their power to thereby pre-amplify the pulses; a modulator connected to the preamplifier and configured to receive the pre-amplified pulses and modulate at least one of them to thereby produce a modulated pulse train; an amplifier connected to the modulator and configured to receive the modulated pulse train and increase the power of the modulated pulse train; wherein along an optical path which is followed by the pulses in the pulse generator and starts from the pulse source, the stretcher is between the pulse source and the preamplifier, and the preamplifier is between the stretcher and the modulator. The transceiver of the first aspect of the invention may also be referred to as an apparatus or device or system.

The transceiver of the first aspect of the invention advantageously allows for the generation and transmission of optical signals which exhibit very good properties. Hence, the transceiver may advantageously be used for establishing high quality FSO communications. Also, the inventors of the present invention have observed that the stretcher of the pulse generator of the transceiver benefits surprisingly well the operation and performance of the transceiver. Related to the observation, it is contemplated that the stretcher may beneficially be acting to prevent or counteract a temporal compression of the pulses in the pre-amplifier and/or in the amplifier of the pulse generator. Such a temporal compression may for example be caused by non-linear optical effects that may occur in the amplifier during the operation of the transceiver, especially when in the pre-amplifier or in the amplifier the pulses are amplified to high powers. The potential occurrence of a temporal compression of a pulse can cause the broadening of the pulse's spectral width. This is to say, a temporal compression of the pulse may result to the increase of the pulse's width in the wavelength range. Such a broadening of the pulse's spectral width may be undesired for FSO communications because, as mentioned further above, when a pulsed optical signal travels through a dispersive medium like the atmosphere, the dissipation of the signal's power by the medium may increase as the spectral bandwidth of the signal's pulses increases. Hence, the stretcher may advantageously prevent or counteract a temporal compression of the pulses in the pre-amplifier and/or in the amplifier, so that the pulse generator may advantageously allow for the generation of optical signals of both high optical powers and narrow spectral widths.

The pre-amplifier of the pulse generator, via pre-amplifying the pulses, may advantageously improve the effectiveness via which the modulator can properly modulate one or more of the pulses. It may be understood that the pulses transmitted by the transceiver form an optical signal, and the modulator of the transceiver can be used for encoding in the optical signal, via modulating at least one of the signal's pulses, information which is to be transmitted by the transceiver. The pre-amplifying of the pulses may advantageously facilitate the modulator's ability to effectively modulate at least one of the pulses for the purpose of encoding information in the optical signal formed by the pulses. Moreover, in at least some preferred embodiments of the invention, the pre-amplifier may advantageously facilitate achieving that the modulation of the pulses can be done at high speeds. In addition, in some embodiments of the invention it is possible that the modulator may attenuate to some extend the optical signal, and in that case the pre-amplifier may advantageously ensure that the signal, despite its potential attenuation during its modulation, is strong after the modulation. Likewise, the amplifier that receives the optical signal from the modulator and amplifies it, may also advantageously ensure that the signal can be efficiently transmitted, via free-space, along large distances.

In a preferred embodiment of the invention, the optical pulses generated by the pulse generator when the latter is in operation have a pulse duration of 1 ps or more and a spectral linewidth of less than 234 GHz, preferably the linewidth being the full width at half-maximum of an optical spectrum of the pulses. When the linewidth is < 234 GHz and the pulse duration is ≥1 ps, then there is a tradeoff between the pulses' temporal width and spectral width, so that such tradeoff may favor and improve the transmissivity of the pulses via the atmosphere or another dispersive medium. For the same reason, preferably the pulse duration of the stretched pulses is of between 1 ps and 10 ps. In the latter case, the stretched pulses which are received by the pre-amplifier may have the proper duration such that a possible subsequent temporal compression of the pulses, wherein said compression may in some embodiments occur in the pre-amplifier or in the amplifier, will not render the pulses unsuitable for long-range transmission via free space. Hence, in a preferred embodiment of the invention, the stretched pulses have a pulse duration of between 1 ps and 10 ps.

In a preferred embodiment of the invention, the stretcher and the modulator are along a non-circular part of the optical path. In the latter case, it may be understood that during an operation of the transceiver, the optical pulses generated by the pulse source pass through the stretcher and the pre-amplifier only once. This preferable configuration of the pulse generator is simple, i.e. non-complex, and relatively easy to implement, and favors an efficient generation and transmission by the transceiver of optical signals which are suitable for FSO communications.

In a preferred embodiment of the invention, the stretcher exhibits a normal optical dispersion, and the preamplifier and the amplifier exhibit respective anomalous optical dispersions of opposite sign compared to the normal optical dispersion of the stretcher. In the latter case, even though the pre-amplifier and the amplifier may, due to their respective anomalous optical dispersions, cause the temporal compression of the pulses, that temporal compression may be counteracted or even be prevented by the temporal stretching applied to the pulses by the stretcher before the pulses reach the pre-amplifier and the amplifier. Hence, the quality of the optical signal formed by the pulses may be improved.

In a preferred embodiment of the invention, the pulse source comprises: a light source configured to generate a pump light; an optical cavity; a fibre isolator; a wavelength division multiplexer connected to the light source, the optical cavity and the fibre isolator, wherein the wavelength division multiplexer is configured to receive the pump light generated by the light source and pass it to the optical cavity; wherein the optical cavity is configured to receive the pump light and generate an optical emission in a mode-locked regime; and the wavelength division multiplexer is further configured to receive the optical emission generated by the optical cavity and pass it to the fibre isolator which is connected to the stretcher for passing to the latter the optical emission as the seed optical pulses. The latter configuration may advantageously exhibit very good operation stability. For example, the fibre isolator may advantageously favor operational stability via avoiding reflections towards the cavity. It is noted that for the purpose of improving the source's stability across a wide range of room temperature, preferably the pulse source is temperature controlled, i.e. it is configured to maintain a constant temperature. Moreover, in the aforementioned optional configuration in which the pulse generator comprises the optical cavity, preferably the optical cavity comprises a rare-earth-doped fibre, a low pass dichroic mirror, a high pass filter and a saturable semiconductor absorber mirror, wherein a first end of the rare-earth-doped fibre is connected to the high pass dichroic mirror, and a second end of the rare-earth-doped fibre is connected via the high pass filter to the semiconductor saturable absorber mirror, more preferably the high pass filter being attached to the second end of the rare earth doped fibre and configured to reflect light of a pump wavelength and to allow a signal pass via the high pass filter. In the latter case, the configuration of the cavity may advantageously facilitate achieving a stable and efficient generation of the seed optical pulses. Also, during an operation of the pulse source, the aforementioned low pass dichroic mirror may advantageously let the pump light from the light source to pass, and may reflect most of the optical emission generated in the cavity. In addition, the high pass filter may advantageously prolong the life-time of the pulse source and improve the efficiency of the cavity via, respectively, protecting the semiconductor saturable absorber mirror from any residual pump light in the cavity, and directing the residual pump light back to the gain medium, i.e. the doped fiber, for thereby increasing the amplification by the cavity.

In a preferred embodiment of the invention, an optical output formed by the seed optical pulses generated by the cavity has an average power of at least 100 microwatts, a linewidth of <234 GHz and a pulse duration of >1 ps, preferably the average power being in the range from 100 microwatts to 1000 microwatts, and the pulse duration being in the range from 1 ps to 10 ps. Also, preferably a central wavelength of the optical output is in the range from 1530 nm to 1565 nm, i.e. in the C-band for optical communications, and more preferably the central wavelength is at about 1553 nm. Likewise, preferably the corresponding central wavelength of the optical signal generated by the pulse generator, i.e. a central wavelength of the pulses generated by the pulse generator, is in the range from 1530 nm to 1565 nm, and more preferably is at about 1553 nm.

In a preferred embodiment of the invention, the stretcher comprises any of the following: a dispersion compensating fibre connected to the pulse source. In the latter case, preferably the dispersion compensating fibre has a length of at least 10 m and/or exhibits a normal optical dispersion the absolute value of which is at least 10 ps/(nm·km). The aforementioned dispersion compensating fibre provides for a simple yet efficient and reliable way for temporally stretching the pulses. Alternatively, the stretcher may be configured to cause a temporal stretch of the pulses not via the use of a dispersion compensating fibre, but instead via the use of a pulse stretcher reflector. Hence, in a preferred embodiment of the invention, the stretcher comprises a pulse stretcher reflector which comprises a chirped fibre Bragg grating. Such a chirped fibre Bragg grating may advantageously be able to introduce chromatic dispersion for causing a temporal stretching of the pulse.

In a preferred embodiment of the invention, the preamplifier comprises: an active fibre which preferably is an Er/Yb co-doped double-clad fibre; a power combiner connected to the stretcher and to a first end of the active fibre; a pump diode connected to the power combiner for optically pumping via the latter the active fibre. In the latter case, preferably the preamplifier further comprises, at its output, an optical filter configured to filter out from the pre-amplified optical pulses an optical noise generated in the preamplifier, more preferably the optical filter being a fibre filter. In the latter embodiment, the configuration of the preamplifier is an optional configuration that advantageously is not complex, it may facilitate the fabricability of the preamplifier, and may also provide for an efficient and reliable way for pre-amplifying the pulses. In particular, said optional configuration of the pre-amplifier may allow for advantageously achieving that the optical output of the preamplifier, i.e. the output formed by the pre-amplified pulses, is several of tens of even hundreds of milliwatts (mW). Accordingly, in a preferred embodiment of the invention an average power of an optical output of the pre-amplifier has a value in the range between 10 mW and 500 mW.

In a preferred embodiment of the invention, the modulator comprises a Mach-Zehnder modulator and is configured to encode in the modulated pulse train information comprising "1" bits and "0" bits, and the Mach-Zehnder modulator for encoding a "1" bit is configured to allow the pass via the same of a corresponding one of the pre-amplified pulses, and the Mach-Zehnder for encoding a "0" bit is configured to block the pass via the same of a corresponding one of the pre-amplified pulses. The Mach-Zehnder modulator (MZM) may advantageously offer high-speed signal modulation for achieving high-data-rate FSO communications. Also, in at least some embodiments in which an MZM is used for the modulation of the optical signal, the MZM may provide a chirp-free operation for reducing signal distortion and enhancing transmission distance. However, it is noted that in some other alternative embodiments of the invention, the modulator of the transceiver instead of comprising a Mach-Zehnder modulator, may comprise a different type of modulator configured to apply a phase or an amplitude type of modulation of the pulses.

In a preferred embodiment of the invention, the modulated pulse train comprises first segments corresponding to "1" bits of information and second segments corresponding to "0" bits of information, and the amplifier comprises: a filter section connected to the modulator and configured to receive from the latter the modulated pulse train and increase an extinction ratio between the first segments and the second segments thereby producing a filtered signal; one or more fibre combiners connected to the filter configuration and configured to receive from the latter the filtered signal and extract a first part of the filtered signal; an amplification section comprising a master oscillator power amplifier which is connected to the one or more combiners and is configured to receive from the latter a second part of the filtered signal and amplify it thereby producing an amplified pulse train. In the latter case, preferably the master oscillator power amplifier (MOPA) comprises a gain fibre as a gain medium of the amplification stage, and/or the pulse generator further comprises an endcap connected to the master oscillator power amplifier for the emission via the endcap of the amplified pulse train. The gain fiber is preferably a rare-earth-doped fiber, more preferably an Er/Yb co-doped fiber i.e. a fiber doped with Er and Yb. In the latter embodiment, the filter section via increasing the extinction ratio between the first and the second segments of the modulated pulse train, may effectively increase the SNR (signal-to-noise ratio) of the optical signal formed by the modulated pulse train, such that at an optical output of the filter section the average SNR ratio of the signal is larger compared to the average SNR ratio of the signal at an optical input of the filter section. Also, the aforementioned one or more fiber combiners may advantageously be utilized for using one more parts of the signal as a reference and/or for checking whether the modulator operates correctly. In addition, the MOPA may advantageously allow for simultaneously achieving high output power, excellent signal quality, spectral purity, and coherence. Hence, the MOPA may advantageously facilitate maintaining high signal fidelity while increasing optical output. To that end, the preferable use of a relative short piece, e.g. of a piece with a length of 1 m or less, of the aforementioned gain fibre as the MOPA's gain medium may facilitate achieving that the amplified optical signal at the output of the MOPA has a high power, e.g. a power which is equal to or larger than 0.5 W, while at the same time the signal is not significantly distorted and maintains a bandwidth which is ≤234 GHz and within a Fourier transform limit of ≥ 1ps. It is noted that considering that the intensity (power per unit area) of the pulses at the optical output of the MOPA may be high and, consequently, compromise the structural integrity of the pulse generator at the MOPA's output, it is preferable to use at said output of the MOPA the aforementioned endcap which may be configured to spread the spatial distribution of the pulsed light beam and reduce the intensity of the amplified optical signal at the MOPA's output.

In a preferred embodiment of the invention, herein referred to as "first exemplary embodiment", the transceiver further comprises an optical head which is optically coupled to the pulse generator and to the receiver and is configured to transmit and receive corresponding optical signals which are transmitted and received, respectively, by the transceiver when the latter is operation. In the latter case, the optical head may advantageously improve the compactness and ease of installation and operation of the transceiver.

In a preferred embodiment which is according to the first exemplary embodiment, the optical head comprises a first portion optically coupled to the pulse generator and configured to receive the optical pulses generated by the pulse generator and emit them, via a first aperture of the optical head as an output beam towards outside the optical head, and the optical head further comprises a second portion optically coupled to a detector of the receiver and configured for directing to the detector an input beam received by the transceiver via a second aperture of the optical head. In the latter case, preferably the first portion comprising a first off-axis parabolic mirror which is coupled to an endcap of the pulse generator, and the second portion comprising a second off-axis parabolic mirror which is coupled to the detector of the receiver. Also, preferably the aforementioned output beam and/or input beam are/is collimated. The configuration of the optical head in the latter embodiment, advantageously allows for the optical head to be compact, and provides for an efficient way to reliably emit/transmit and receive pulsed optical signals. Alternatively, in some embodiments the optical head may comprise at least one telescope, i.e. at least one compact optical configuration that acts as a respective telescope, for emitting and/or receiving optical signals.

In a preferred embodiment which is according to the first exemplary embodiment, the optical head comprises a pointing and tracking system which is configured to controllably point the optical head towards different directions. The pointing and tracking system is an optional feature which may advantageously improve the functionality of the transceiver, especially in cases in which the transceiver's position or orientation needs to be dynamically adjusted. Such a need may arise in an FSO system in which one or both of two transceivers which communicate to each other is/are being moved during the operation of the system, and/or in cases wherein the transceiver is accidently moved. It is noted that in the optional case that the optical head comprises the aforementioned pointing and tracking system, then the latter may comprise one or motorized parts or stages for moving the head as a whole and/or for moving or adjusting any optical parts of the head involved in the emission/transmission and reception, by the head, of the pulsed optical signals.

In a preferred embodiment of the invention, the transceiver further comprises a continuous wave (CW) optical source configured to generate a CW optical signal; the transceiver also comprises an optical switch, wherein the optical switch is configured to optically connect the pre-amplifier and the CW optical source to the modulator; wherein the optical switch is further configured to select between the CW optical signal and a pulsed UFPL optical signal formed by the pre-amplified pulses, and to pass the selected optical signal to the modulator. In the latter embodiment, the transceiver may advantageously operate in two different modes, the first mode being a CW mode that may be preferable to use for the transmission of signals through the atmosphere when the atmospheric conditions are good, e.g. when there are no clouds or fog, and the second mode being a pulsed mode that may be preferable to use for the transmission of signals through the atmosphere when the atmospheric conditions are not good, e.g. when there are heavy clouds or a dense fog. Hence, in the former case when the atmospheric conditions are good, the CW mode can be selected and such a mode could, in a preferred embodiment of the invention, be used for transmitting information at high data rates e.g. up to 10 or 100 Gbps. Similarly, in the latter embodiment, when the atmospheric conditions are adverse (e.g. when there is rain, fog, scintillation...), it may not be ideal to use the CW mode due to the losses generated by the atmosphere, especially because said losses can even lead to link failure. In this situation, the transceiver equipped with the aforementioned optical switch could switch to the pulsed mode that may be more tolerant to the adverse conditions, maintaining the link connection. In such a pulsed mode, which in a very preferred embodiment is an ultra-fast pulse laser (UFPL) mode, the transmission data rate may be equal to or lower than 10 Gbps, and for example may be 1.25 Gbps.

The invention in a second aspect concerns a method for free-space optical communications, the method comprising: generating seed optical pulses; increasing the duration of the seed optical pulses thereby stretching the pulses; increasing the power of the stretched pulses thereby pre-amplifying the pulses; modulate at least one of the pre-amplified pulses thereby producing a modulated pulse train; increase a power of the modulated pulse train. The method of the second aspect of the invention may be implemented via the use of the transceiver of the first aspect of the invention.

The invention in a third aspect concerns a system for free space optical communications, wherein the system comprises at least two transceivers of the first aspect of the invention. The at least two transceivers may be used for the establishment between them of a link.

It may be understood that the apparatus of the first aspect of the invention may be used for implementing the method of the first aspect of the invention. Also, any of the optional features described herein with regards to embodiments according to the first aspect of the invention, may correspond to respective optional features of embodiments according to the second or third aspect of the invention, and vice versa.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 schematically illustrates a preferred embodiment of a transceiver according to the first aspect of the invention.
Fig. 2 schematically illustrates part of the embodiment of Fig. 1
Fig. 3 schematically illustrates part of a preferred embodiment of a transceiver according to the invention.
Fig. 4 schematically illustrates part of a preferred embodiment of a transceiver according to the invention.
Fig. 5 illustrates an optical spectrum measured with an optical spectrum analyzer (OSA) at an optical output of a pulse source used in a preferred embodiment of the invention.
Fig. 6 illustrates a radio frequency (RF) spectrum measured with an electrical spectrum analyzer (ESA) connected to a photodetector positioned at an optical output of a pulse source used in a preferred embodiment of the invention.
Fig. 7 schematically illustrates part of a preferred embodiment of a transceiver according to the invention.
Fig. 8 illustrates two optical spectra measured, with and without filter, at an optical output of a pre-amplifier used in a preferred embodiment of the invention.
Fig. 9 illustrates a pseudo random binary sequence (PRBS) of pulses measured, after noise filtering, at an output of a modulator used in a preferred embodiment of the invention.
Fig. 10 schematically illustrates part of a preferred embodiment of a transceiver according to invention.
Fig. 11 illustrates an optical spectrum measured with an optical spectrum analyzer (OSA) at an optical output of a pulse generator of a preferred embodiment of the invention, for an output power of 0.5 W and with a PRBS of 2²³-1.
Fig. 12 illustrates an autocorrelation trace of the output pulses with a temporal length of 2.1 ps, as measured at an optical output of a pulse generator used in a preferred embodiment of the invention, for an output power of 0.5 W and with a PRBS of 2²³-1.
Fig. 13 schematically illustrates part of a preferred embodiment of a transceiver according to the invention.
Fig. 14 schematically illustrates part of a preferred embodiment of a transceiver according to the invention.
Fig. 15 illustrates an eye diagram measured via an oscilloscope connected to a receiver of an embodiment of the invention, using infinite persistence mode, and for a modulation sequence which is a PRBS of 2²³-1.
Fig. 16 schematically illustrates part of a preferred embodiment of a transceiver according to the invention.
Fig. 17 schematically illustrates part of a preferred embodiment of a transceiver according to the invention.
Fig. 18 schematically illustrates an operation of a preferred embodiment of an FSO system according to the invention, wherein the system comprises two transceivers.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing embodiments and results according to the invention.

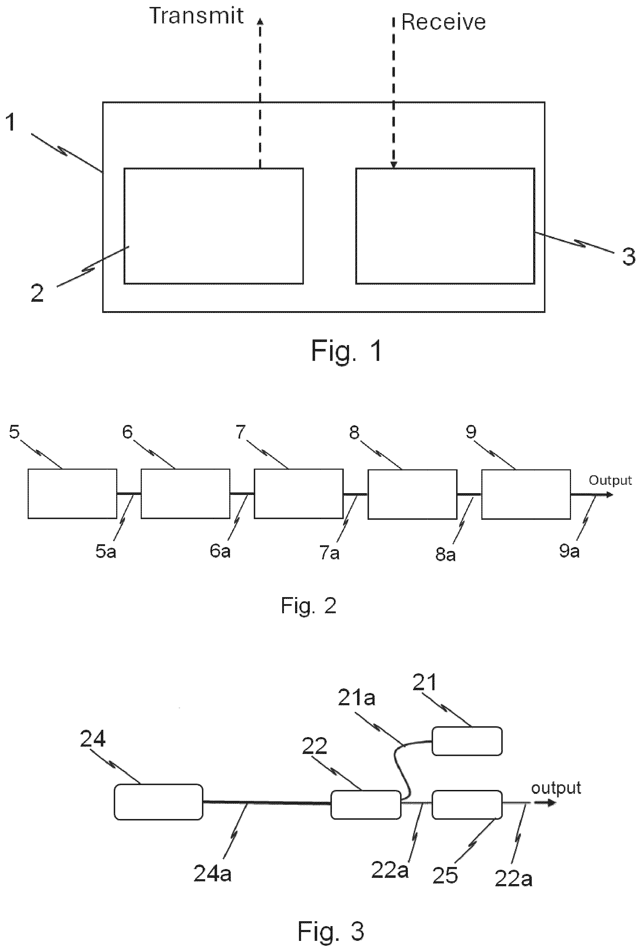

A preferred embodiment of a transceiver according to the first aspect of the invention, is explained next with reference to Fig. 1 and Fig. 2. The transceiver 1 of Fig. 1 and Fig. 2 is for free-space optical (FSO) communications and comprises a pulse generator 2 and a receiver 3. The pulse generator 2 is configured to generate optical pulses and comprises a pulse source 5, a stretcher 6, a preamplifier 7, a modulator 8 and an amplifier 9. The pulse source 5 is configured to generate seed optical pulses. The stretcher 6 is connected to the pulse source 5 and is configured to receive the seed optical pulses and increase their duration, to thereby stretch the pulses. The preamplifier 7 is connected to the stretcher 6 and is configured to receive the stretched pulses and increase their power to thereby pre-amplify the pulses. The modulator 8 is connected to the preamplifier 7 and is configured to receive the pre-amplified pulses and modulate at least one of them to thereby produce a modulated pulse train. The amplifier 9 is connected to the modulator 8 and is configured to receive the modulated pulse train and increase the power of the modulated pulse train. Also, as can be understood from Fig. 2, along an optical path which is followed by the pulses in the pulse generator 2 and starts from the pulse source 5, the stretcher 6 is between the pulse source 5 and the preamplifier 7, and the preamplifier 7 is between the stretcher 6 and the modulator 8. It is noted that in the embodiment of Fig. 2, the pulse source 5, the stretcher 6, the preamplifier 7, the modulator 8 and the amplifier 9 are optically connected between them via respective optical fibers 5a, 6a, 7a, 8a, however alternatively any or all of these connections may involve free-space optics. Similarly, at an optical output of the pulse generator there may be an optical fiber 9a as shown in Fig. 2, however, alternatively at the output of the pulse generator 2 there may be one or more other optical components for the transmission of an optical signal that is outputted by the pulse generator.

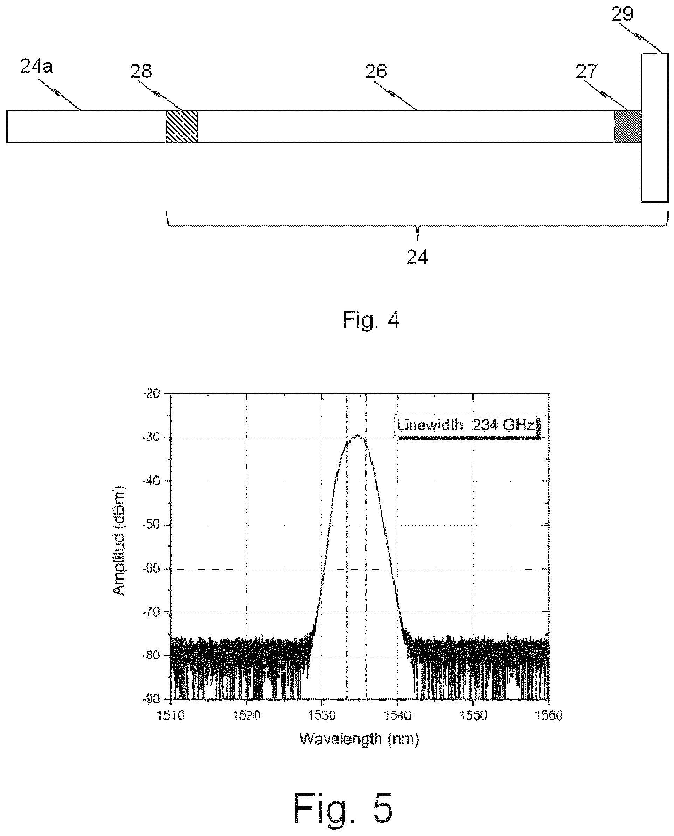

Another preferred embodiment of the invention is explained next with reference to Fig. 3-15. The embodiment of Fig. 3-15 is according to the one of Fig. 1-2 and hence, has the configuration shown in Fig. 1 and Fig. 2. In addition, in the embodiment of Fig. 3-15 the pulse source 5 has the configuration shown in Fig. 3 and Fig. 4 and comprises: a light source 21, an optical cavity 24, a fibre isolator 25, and a wavelength division multiplexer 22. The light source 21 is configured to generate a pump light. The wavelength division multiplexer 22 is connected to the light source 21, the optical cavity 24 and the fibre isolator 25. Also, the wavelength division multiplexer 22 is configured to receive the pump light generated by the light source 21 and pass it to the optical cavity 24. The optical cavity 24 is configured to receive the pump light and generate an optical emission in a mode-locked regime. Moreover, the optical cavity 24 comprises a rare-earth-doped fibre 26, a low pass dichroic mirror 28, a high pass filter 27 and a saturable semiconductor absorber mirror 29. As shown in Fig. 4, a first end of the rare-earth-doped fibre 26 is connected to the low pass dichroic mirror 28, and a second end of the rare-earth-doped fibre 26 is connected via the high pass filter 27 to the semiconductor saturable absorber mirror 29. Also, the high pass filter 27 is attached to the second end of the rare earth doped fibre 26 and is configured to reflect light of a pump wavelength. In addition, the high pass filter 27 is configured to allow a signal to pass via the high pass filter 27. Also, the wavelength division multiplexer 22 is further configured to receive the optical emission generated by the optical cavity 24 and pass it to the fibre isolator 25 which is connected to the stretcher 6 for passing to the latter the optical emission as the seed optical pulses. Hence, it may be understood that the optical cavity 24 generates the seed optical pulses which are passed to the stretcher 6.

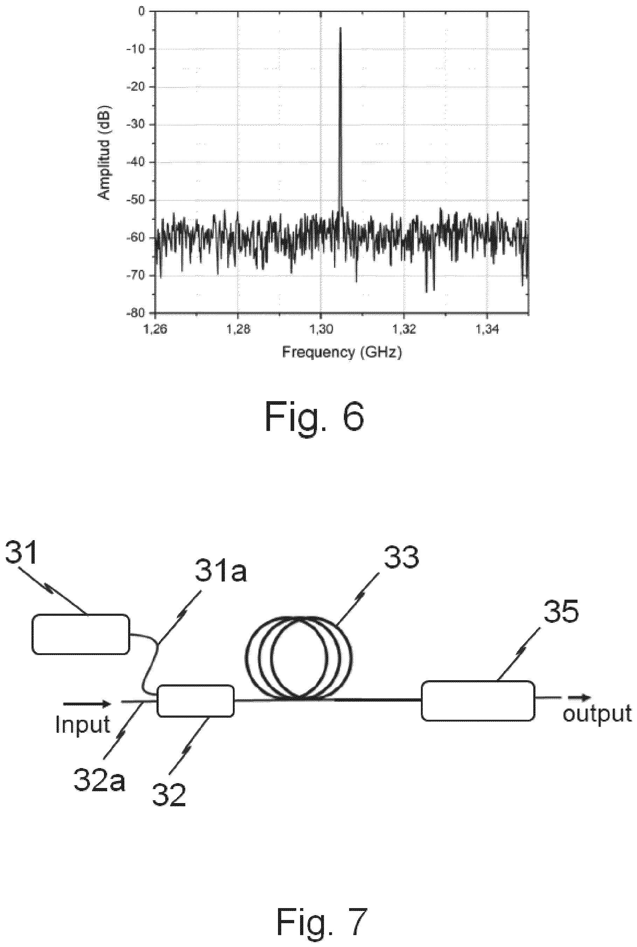

It is noted that in the embodiment of Fig. 3-4 the pulse source 6 emits light in the C-band and has a repetition rate of 1.3 GHz- Also, the fibre 26 is an Er/Yb co-doped fibre. In addition, the light source 21 is a CW pump-diode, and the low pass dichroic mirror which is one side of the cavity lets the light from the pump diode pass and reflects the 95% of the C- band signal. On the opposite end of the cavity, the semiconductor saturable absorber mirror (SESAM) 29 is used to force the mode-locked operation. The end face of the fibre 26 where the SESAM is located, is coated with the high pass filter layer 27 that reflects the pump wavelength and lets the C band signal pass. This design has two advantageous effects, firstly the filter 27 protects the SESAM from the residual light of the pump, and secondly the residual pump comes back to the grain medium increasing the amplification of the cavity. The pump diode 21 that provides the pump light is a 910 nm single mode CW diode, and the pump light is pumped inside the cavity through the wavelength division multiplexer (WDM) 22 which is connected to the cavity 24 via an optical fibre 24a. Also, the fibre isolator 25 which is a fibre isolator in the C band is included at the output of the pulse source 5 to protect both the integrity and the stability of the cavity from eventual reflections generated in the subsequent stages of the pulse generator 2. It is noted that the pulse source 5 may also be called "seeder". Also, the output of the seeder of Fig. 3-4 presents an average output power of hundreds of µW (microwatts), a central wavelength of 1535 nm, a linewidth of < 234 GHz corresponding to a Fourier transform-limited pulse duration of at least 1.1 ps or longer. Concerning the seeder of Fig. 3-4, Fig. 5 shows the optical spectrum of the seeder measured with an optical spectrum analyzer (OSA), and Fig. 6 shows the RF spectra measured with an electrical spectrum analyzer (ESA). Also, it is noted that in the embodiment of Fig. 3-15, the different components of the seeder are connected to each other via respective optical fibers 21a, 22a, 24a, as shown in Fig. 3. Also, an optical fibre 22a is at an output of the seeder (i.e. of the pulse source 5) for connecting the latter to the stretcher.

In the embodiment of Fig. 3-15, the stretcher which may also be referred to as "stretching stage" comprises a dispersion compensating fibre (DCF) of normal dispersion which performs the stretching of the pulses. Therefore, in the optional case that a seed pulse received by the stretcher already has a time duration of 1 ps due to its Fourier transform limit, the duration of pulse at the output of the stretcher will be more than 1 ps and up to 100 ps, more preferably less than 50 ps, more preferably less than 10 ps. In a preferred embodiment which is according to the one of Fig. 3-15 the DCF is the PM2000D model having a length of 40 meters and a normal dispersion of -50 ps/(nm·km). However, it is noted that the same or a similar pulse stretching effect could be obtained by using a different stretcher configuration, such as for example a pulse stretcher (PSR) based on a chirped fibre Bragg grating (FBG) with a total dispersion that corresponds to the one generated by the DCF referred above.

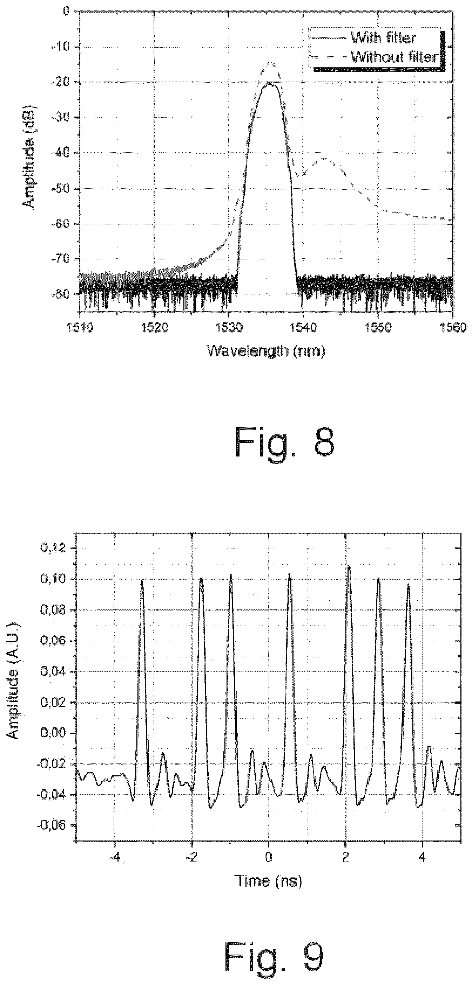

Also, in the embodiment of Fig. 3-15, the preamplifier which may also be referred to as "preamplification stage", comprises an active fibre 33, a power combiner 32 and a pump diode 31, as illustrated in Fig. 7. The active fibre 33 is an Er/Yb co-doped double-clad fibre. In the embodiment of Fig. 7 the length of the active fibre 33 of the preamplifier is 4 m (meters). At the input of the power combiner 32 there is an optical fibre 32a that connects the preamplification stage to the stretcher. Also, the power combiner 32 is connected to a first end of the active fibre 33. Also, via another optical fibre 31a the pump diode 31 which is a CW pump diode is connected to the power combiner 32 so that, via the power combiner 32, the pump diode 31 can optically pump the active fibre 33. In the embodiment of Fig. 7 the pump diode 31 of the preamplifier is a 9 W multimode diode at 976 nm. Moreover, the preamplification stage shown in Fig. 7 comprises at its output a fibre isolator 35 connected to a second end of the active fibre 33. Also, in the embodiment of Fig. 7 the preamplification process generates optical noise due to amplified spontaneous emission (ASE). For this reason, at the output of the preamplification stage preferably there is placed a fibre filter with a linewidth of 6 nm at 0.5 dB. This fibre filter is configured to filter out from the pre-amplified optical pulses the optical noise. In the embodiment of Fig. 3-15, the average power of the signal that is obtained at the output of the preamplifier shown in Fig. 7 is typically in the order of 100 mW, and the measured spectrum of the optical signal at the output of the preamplifier, with and without the aforementioned fibre filter, is shown in Fig. 8.

Also, in the embodiment of Fig. 3-15, the modulator 8 comprises a Mach-Zehnder modulator (MZM) which is configured to encode in the modulated pulse train information comprising "1" bits and "0" bits. Also, the MZM for encoding a "1" bit is configured to allow the pass, via the MZM, of a corresponding one of the pre-amplified pulses. Also, the MZM for encoding a "0" bit is configured to block the pass via the MZM of a corresponding one of the pre-amplified pulses. Hence, it may be understood that in the embodiment of Fig. 3-15 the information to be transmitted is encoded by using the laser pulses of the "laser", wherein the term "laser" refers to the combination of the pulse generator 5, the stretcher 6 and the preamplifier 7. The modulation done by the modulator 8 of the embodiment of Fig. 3-15 is an On-Off Keying (OOK). By using the MZM, when a "1" is to be encoded, the MZM lets the corresponding pulse pass.

On the other side, when a "0" is to be encoded, the MZM blocks the corresponding pulse. For this purpose, the embodiment of Fig. 3-15 also comprises a field-programable gate array (FPGA) which is used for sending an RF signal to be coded in the optical domain by the MZM. At the output of the preamplifier a part of the light is extracted by using a fiber coupler (not shown in the drawings) to generate a clock signal that is used for synchronizing the FPGA with the MZM and the laser. The same FPGA may also be used for clock recovering and as decoding device in the receiver of the communication system. Figure 9 shows an example of a pseudorandom binary sequence (PRBS) at the MZM optical output, measured with the oscilloscope.

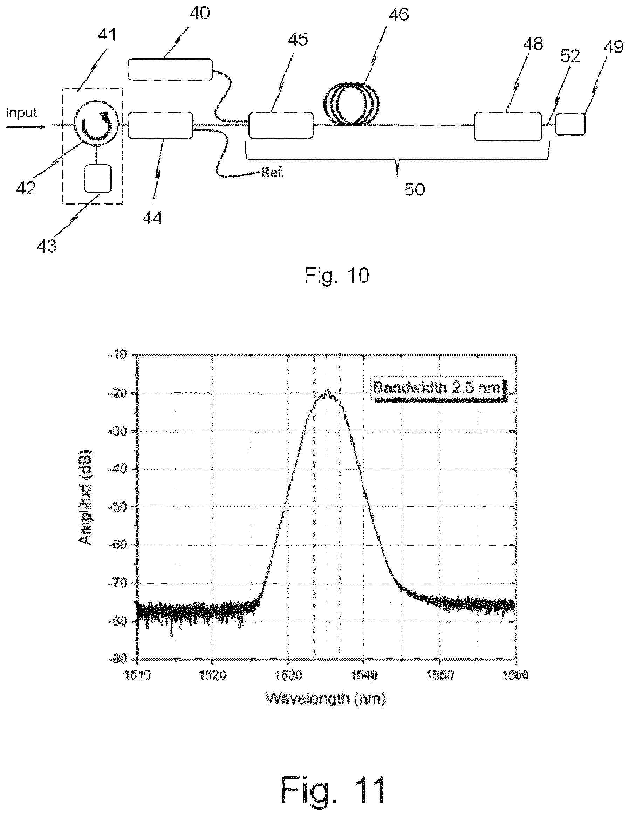

The configuration of the amplifier 9 of the embodiment of Fig. 3-15 is illustrated in Fig. 10. It is noted that the amplifier 9 may also be referred to as "amplification stage". The amplifier shown in Fig. 10 comprises a filter section 41, an amplification section 50, and a group of fibre combiners 44 via which the amplification section is connected to the filter section. The filter section 41 is at an input of the amplifier and is connected to the modulator for receiving from the latter the modulated pulse train i.e. the modulated optical signal that is outputted by the modulator. That modulated optical signal that is received by the filter section 41 comprises first segments corresponding to "1" bits of information and second segments corresponding to "0" bits of information. The filter section 41 is configured to receive the modulated optical signal ( i.e. the modulated pulse train) and increase an extinction ratio between the first segments and the second segments. For this purpose, the filter section 41 shown in Fig. 10 comprises a semiconductor saturable absorber mirror (SESAM) 43 and a circulator 42 which is connected to the SESAM 43. The SESAM 43 acts as a mirror for the higher pulses corresponding with the "1"s and absorbs the energy of the "0"s, thereby increasing the extinction ratio between the "1" pulses and the "0" pulses. The signal that has the increased extinction ratio and is outputted by the filter section 41 may called "filtered signal". The group of fibre combiners 44 is connected to the filter section 41 and is configured to receive from the latter the filtered signal and extract a first part of it (i.e. of the filtered signal) for control operations. In the embodiment pf Fig. 3-15, a portion of the part of the signal that is extracted by the fibre combiners 44 is photo-detected by a control board of the transceiver to check the operation of the modulator, and another portion of the extracted signal is used as an auxiliary reference (Ref.).

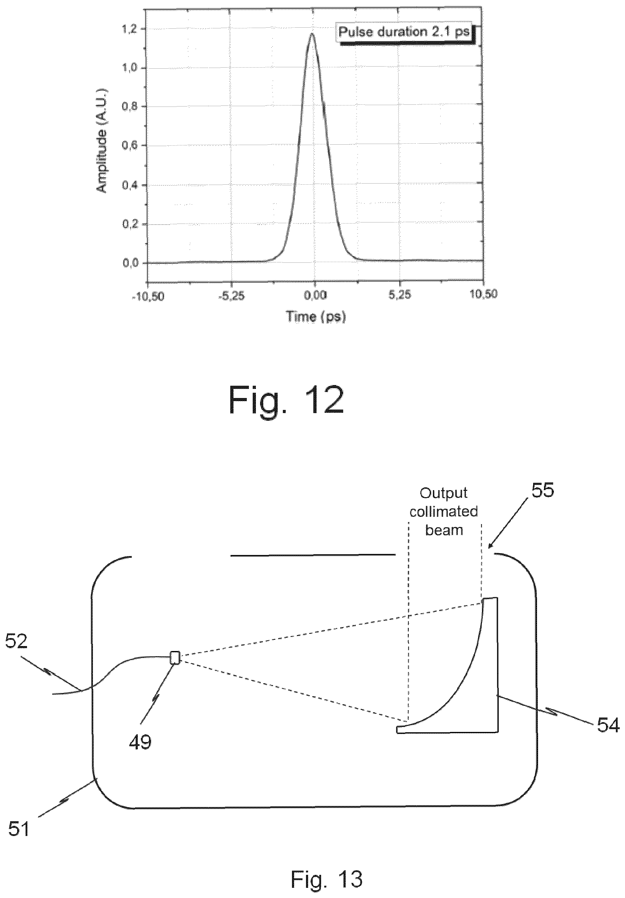

Also, in the amplification stage shown in Fig. 10, the amplification section 50 comprises a master oscillator power amplifier (MOPA) which is connected to the combiners 44 and is configured to receive from the latter a second part of the filtered signal and amplify it. In this way the MOPA can produce an amplified signal i.e. an amplified pulse train. For this purpose, the MOPA comprises a gain fiber 46 which is a polarization maintaining fibre and acts as the gain medium of the amplification stage. It is noted that in the amplification stage of Fig. 10, the polarization maintaining (PM) gain fibre 46 is a piece of Er/Yb co-doped double clad fibre which has a length of 1 m or less and is pumped through a power combiner 45 by a pump diode 40 which is a 978 nm multimode diode. Also, the amplifier of Fig. 10 comprises a polarized isolator 48 that is connected to the gain fiber 46. It also noted that the gain fibre 46 used in the amplifier of Fig. 10 has an anomalous dispersion and the bandwidth of the amplified optical signal that is outputted by the MOPA is within a Fourier transform limit of 1 ps or higher. This corresponds to a bandwidth of around 234 GHz at 1535 nm. Also, the average output power of the signal that is outputted by the MOPA of Fig. 10 is > 0.5 W. At the output of the modulator the latter comprises an optical fibre 52 that is a PM1550XP fibre. However, the high energy density of the output signal may compromise the integrity of the fibre 52 at an end-face of the fibre 52. To avoid this, an endcap 49 is used at the output of the amplifier of Fig. 10. This endcap 49 comprises a piece of coreless fibre of around 200 µm (micrometers) length spliced to the PM1550XP fibre. In this way the beam (i.e. the output signal of the amplifier) is spread and reduces the spectral density at the end-face of the fibre. The endcap 49 also comprises, and is terminated in, a flat fibre connector (FC). An optical spectrum of the output of the amplifier of Fig. 10 during an operation of the pulse generator is shown in Fig. 11. The spectrum of Fig. 11 is for an output power of 0.5W and with a PRBS of 2²³-1. Also, Fig. 12 shows an autocorrelation trace of the output pulses, produced by the amplifier of Fig. 10. As shown in Fig. 12, the pulse has temporal length, i.e. a duration, of 2.1 ps.

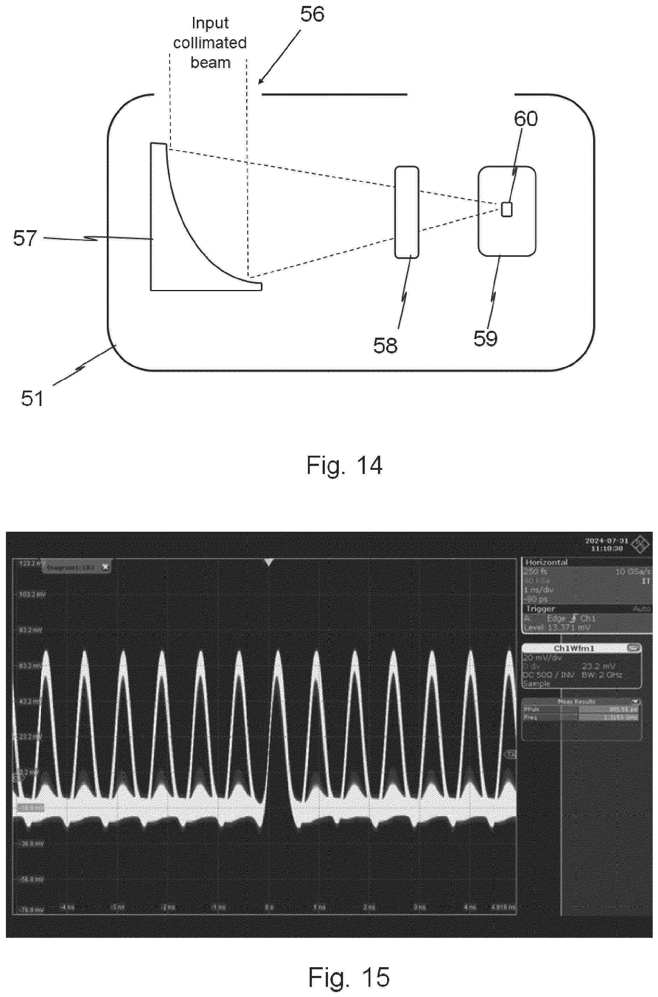

In the embodiment of Fig. 3-15 the light from the endcap 49 is then collected by a first off-axis parabolic mirror 54 acting as a telescope collimating the light signal to be sent to the receiver of another transceiver. The first off-axis parabolic mirror 54 is part of an optical head 51 of the transceiver, and a first portion of the optical head 51 is schematically shown in Fig. 13. The optical head 51 is optically coupled to the pulse generator 2 and to the receiver 3 of the transceiver. Also, the optical head 51 is configured to transmit and receive corresponding optical signals which are transmitted and received, respectively, by the transceiver when the latter is operation. The optical head 51 comprises the first portion which is shown in Fig. 13 and is optically coupled to the pulse generator 2 such that the optical head 51 can receive the optical pulses generated by the pulse generator 2. For this purpose, the first portion of the optical head 51 comprises the aforementioned first off-axis parabolic mirror 54 which is coupled to the endcap 49. The amplified signal which, via the endcap 49, is received by the optical head 51, can, via a first aperture 55 of the optical head 51, be transmitted as (i.e. in the form of) an output collimated beam towards outside the optical head 51, as indicated by the dashed lines in Fig. 13. Moreover, the optical head 51 comprises a second portion which is illustrated in Fig. 14. That second portion of the optical head 51 comprises a second aperture 56 and a second off-axis parabolic mirror 57 which is coupled to the detector 60 of the receiver 3. Via the second aperture 56 the optical head 51 can receive a signal emitted by another transceiver. The received signal, which typically has the form of a collimated beam, is directed via the second off-axis parabolic mirror 57 towards the detector 60 of the receiver 3. The detector 60 is an avalanche photodiode (APD) card. Also, the optical head 51 comprises a variable neutral density (ND) motorized disk 58 positioned between the parabolic mirror and the APD card, as shown in Fig. 14. It is noted that in the embodiment of Fig. 3-15 the aforementioned APD advantageously exhibits a very good sensitivity (-33 dBm). During an operation of the transceiver, and when an optical signal is received by the optical head and is measured and detected by the APD, a radiofrequency output from the APD is sent to the transceiver's aforementioned FPGA which has the function to firstly recover the clock from the signal and secondly demodulate/process the data. Fig. 15 shows an eye diagram measured via an oscilloscope connected to a receiver of the embodiment of Fig. 14, using infinite persistence mode, and for a modulation sequence which is a PRBS of 2²³-1.

In the embodiment of Fig. 13-14 the transceiver also comprises a pointing and tracking system which is configured to controllably point the optical head 51 towards different directions, and to adjust the position of at least some of the optical components of the optical head 51. Specifically, in the embodiment of Fig. 13-14 the pointing and tracking system comprises a 5-axis mount (not shown in Fig. 14) which is used to connect and fix the endcap 49. This mount allows five degrees of freedom to adjust the light over the first off-axis parabolic mirror 54 and achieve a collimated beam. The first off-axis parabolic mirror has a hole (not shown in Fig. 13) which is parallel with the mirror's emission axis. Via this hole the visible light from a visible laser pointer (not shown in the drawings) can be pointed towards the transceiver's emission direction (i.e. the direction of the output collimated beam indicated in Fig. 13), so that the visible laser point can be used for the coarse alignment of system.

The pointing and tracking system of the embodiment of Fig. 3-15, further comprises a motorized stage 59 on which there is the photodetector 60. Also, as part of the pointing and tracking system, the aforementioned variable neutral density (ND) disk 58 is also motorized. Both the motorized APD card (i.e. the photodetector 60) and the ND disk 58 are controlled by software using a reference from the signal detected at the APD to ensure that the systems stays in a detection range of the APD. It is noted that the aforementioned two portions of optical head, i.e. the first portion that is for emitting a signal, and the second portion that is for receiving a signal, preferably have 2 degrees of freedom between them to improve the alignment of the transceivers forming a link in an FSO telecommunications system.

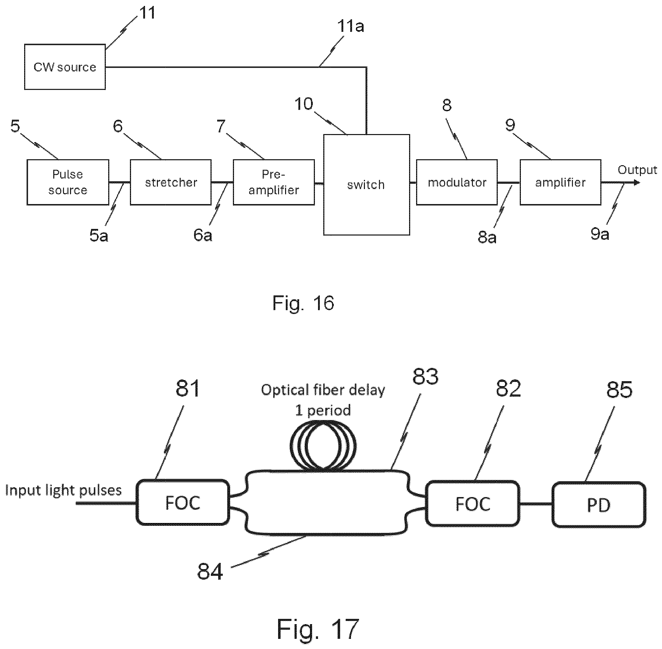

It may be understood that the embodiment of Fig. 3-15 is configured to generate, emit, receive and measure ultra-fast pulsed laser light, and for this reason can be considered as being UFPL system for FSO telecommunications. Hence, it may be understood that the embodiment of Fig. 3-15 is designed to operate in a "UFPL mode". However, another embodiment of the invention which is similar to the one of Fig. 3-15 and is also able to operate in the "UFPL mode", is additionally configured to operate in a second mode that is a "CW mode". Fig. 16 shows the configuration of the pulse generator of that preferred embodiment that can provide both a CW mode and a UFPL mode. The embodiment of Fig. 16 comprises the components of the embodiments of Fig. 1-15, and further comprises an optical switch 10 and a CW optical source 11 which is optically connected to the optical switch 10 via an optical fiber section 11a. The CW optical source 11 is configured to generate a CW optical signal. The optical switch 10 is configured to connect the pre-amplifier 7 and the CW optical source 11 to the modulator 8. Also, the optical switch 10 is further configured to select between the CW optical signal and a pulsed optical signal formed by the pre-amplified pulses, and to pass the selected optical signal to the modulator 8. The CW optical signal preferably has a wavelength of 1535 nm.

In some preferred embodiments of the system, the modulation of the pulsed optical signal that is generated and the pulse generator of the transceiver is not based on the modulation of the pulse's amplitude but instead is based on a phase modulation technique that is implemented using a phase modulator which is configured to change the phase of the pulses for encoding the information. In the latter case, the phase modulator is located between the preamplifier and the master oscillator power amplifier, and is configured to cause a phase change between the adjacent emitted pulses to encode the data. In a preferred embodiment of a FSO telecommunications system in which a link is established between two transceivers which generate and send to each other UFPL signals in which the information is encoded via the aforementioned phase modulation, the corresponding receiver of transceiver receiving a phase modulated signal may preferably be able to perform a coherent detection of the received signal via an interferometer which has the configuration shown Fig.17. The interferometer of Fig. 17 comprises two fiber optical couplers (FOC) 81, 82, which are connected together, preferably with a coupling ration of 50:50, via two arms 83, 84. A first one 81 of the two FOCs receives the pulses optical signal. A first one 83 of the arms of the interferometer has an optical delay of 1 period with respect the repetition rate of the received pulsed signal. The output of the second FOC 84 is connected to a photodiode 85 of the transceiver. In the detection process that can be implemented with the interferometer of Fig. 17, every light pulse received interferes with the preceding pulse. If the pulses' interference is in phase, the output of the interferometer will be a constructive interference corresponding to a "1", but if the pulses are not in phase, there will be a destructive interference, and the output will correspond to a "0".

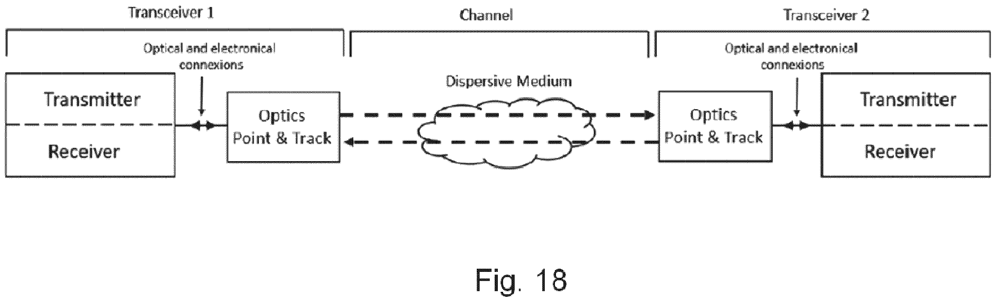

An operation of a preferred embodiment of system for FSO telecommunications is illustrated in Fig. 18. The system of Fig. 18 comprises two transceivers which are according to the invention. A communications link/established is established between the two transceivers which hence exchange optical signals, as indicated by the arrows with the truncated lines shown in Fig. 18. The signals exchanged between the transceivers are transmitted via a dispersive medium e.g. the earth's atmosphere. Each of the two transceivers of the system of Fig. 18 has a respective transmitter portion, a respective receiver portion, and a respective pointing and tracking portion that comprises optical components for facilitating an optical alignment between the two transceivers. In each transceiver there are also optical and electrical connections between the transceiver's pointing and tracking portion and the transceiver's transmitter and receiver portions.

In other preferred embodiments of the invention, the configuration of the transceiver may differ compared to the one of the embodiment of Fig. 3-15. For example, in a preferred embodiment the seed pulses are generated via the use of photonic integrated circuits (PICs). The latter allows an increase in the repetition rate of the seeder with natural frequencies ranging from few GHz to tens of GHz, which may advantageously allow for transmitting information at higher bit rates. Also, photonic integrated frequency multipliers may optionally be used for advantageously increasing the repetition rate of the system is based on the use of photonic integrated frequency multipliers. Also, asymmetric Mach-Zehnder interferometers (AMZI) may optionally be used. For example, AMZI multipliers may be used to divide the light pulses in different paths with a certain delay between them, increasing in this way the final repetition rate of the pulses. Also, there is contemplated the option of integrating in the aforementioned PICs, elements like amplifiers, modulators, and even active or passive arrays of antennas, for miniaturizing the FSO communication system, and for reducing the systems weight and power consumption. Also, there is contemplated the option of integrating in the system photonics adaptive optics which may be utilized for compensating the turbulence caused by the atmosphere. Such adaptive optics may comprise one or more deformable mirrors with actuators which may be controlled by a real-time system that may combine measurements from one or more wavefront sensors.

In this text, the term "comprises" and its derivations (such as "comprising", etc.) should not be understood in an excluding sense, that is, these terms should not be interpreted as excluding the possibility that what is described and defined may include further elements, steps, etc. In the context of the present disclosure, a deviation within reasonable limits from any exact value or values indicated in the present disclosure, should be accepted, because a skilled person in the art will understand that such a deviation from the values indicated is inevitable due to measurement inaccuracies, etc. Unless something else is explicitly stated, all ranges mentioned in this document include the end points of the respective range. Thus, for example, a range indicated using an expression such as "between X and Y" includes X and Y.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A transceiver for free-space optical communications, comprising a pulse generator (2) and a receiver (3), wherein the pulse generator (2) is configured to generate optical pulses and comprises:
a pulse source (5) configured to generate seed optical pulses;
a stretcher (6) connected to the pulse source (5) and configured to receive the seed optical pulses and increase their duration to thereby stretch the pulses;
a preamplifier (7) connected to the stretcher (6) and configured to receive the stretched pulses and increase their power to thereby pre-amplify the pulses;
a modulator (8) connected to the preamplifier (7) and configured to receive the pre-amplified pulses and modulate at least one of them to thereby produce a modulated pulse train;
an amplifier (9) connected to the modulator (8) and configured to receive the modulated pulse train and increase the power of the modulated pulse train;
wherein along an optical path which is followed by the pulses in the pulse generator (2) and starts from the pulse source (5), the stretcher (6) is between the pulse source (5) and the preamplifier (7), and the preamplifier (7) is between the stretcher (6) and the modulator (8).

2. A transceiver according to claim 1, wherein the optical pulses generated by the pulse generator when the latter is in operation have a pulse duration of 1 ps or more and a linewidth of less than 234 GHz, preferably the linewidth being the full width at half-maximum of an optical spectrum of the pulses.

3. A transceiver according to any of the preceding claims, wherein the stretched pulses have a corresponding pulse duration of between 1 ps and 10 ps.

4. A transceiver according to any of the preceding claims, wherein the stretcher (6) and the modulator (8) are along a non-circular part of the optical path.

5. A transceiver according to any of the preceding claims, wherein the stretcher (6) exhibits a normal optical dispersion, and the preamplifier (7) and the amplifier (9) exhibit respective anomalous optical dispersions of opposite sign compared to the normal optical dispersion of the stretcher (6).

6. A transceiver according to any of the preceding claims, wherein the pulse source (5) comprises:
a light source (21) configured to generate a pump light;
an optical cavity (24);
a fibre isolator (25);
a wavelength division multiplexer (22) connected to the light source (21), the optical cavity (24) and the fibre isolator (25), wherein the wavelength division multiplexer (22) is configured to receive the pump light generated by the light source (21) and pass it to the optical cavity (24);
wherein the optical cavity (24) is configured to receive the pump light and generate an optical emission in a mode-locked regime, preferably the optical cavity (24) comprising a rare-earth-doped fibre (26), a low pass dichroic mirror (28), a high pass filter (27) and a saturable semiconductor absorber mirror (29), wherein a first end of the rare-earth-doped fibre (26) is connected to the low pass dichroic mirror (28), and a second end of the rare-earth-doped fibre (26) is connected via the high pass filter (27) to the semiconductor saturable absorber mirror (29), more preferably the high pass filter (27) being attached to the second end of the rare earth doped fibre (26) and configured to reflect light of a pump wavelength and to allow a signal pass via the high pass filter (27);
and the wavelength division multiplexer (22) is further configured to receive the optical emission generated by the optical cavity (24) and pass it to the fibre isolator (25) which is connected to the stretcher (6) for passing to the latter the optical emission as the seed optical pulses.

7. A transceiver according to any of the preceding claims, wherein the stretcher (6) comprises any of the following:
a dispersion compensating fibre connected to the pulse source (5), preferably the dispersion compensating fibre being of length of at least 10 m and/or exhibiting a normal optical dispersion the absolute value of which is at least 10 ps/(nm·km); or
a pulse stretcher reflector comprising a chirped fibre Bragg grating.

8. A transceiver according to any of the preceding claims, wherein the preamplifier (7) comprises:
an active fibre (33) which preferably is an Er/Yb co-doped double-clad fibre;
a power combiner (32) connected to the stretcher (6) and to a first end of the active fibre (33);
a pump diode (31) connected to the power combiner (32) for optically pumping via the latter the active fibre (33);
preferably the preamplifier (7) further comprising, at its output, an optical filter configured to filter out from the pre-amplified optical pulses an optical noise generated in the preamplifier (7), more preferably the optical filter being a fibre filter.

9. A transceiver according to any of the preceding claims, wherein the modulator (8) comprises a Mach-Zehnder modulator and is configured to encode in the modulated pulse train information comprising "1" bits and "0" bits, and the Mach-Zehnder modulator for encoding a "1" bit is configured to allow the pass via the same of a corresponding one of the pre-amplified pulses, and the Mach-Zehnder for encoding a "0" bit is configured to block the pass via the same of a corresponding one of the pre-amplified pulses.

10. A transceiver according to any of the preceding claims, wherein the modulated pulse train comprises first segments corresponding to "1" bits of information and second segments corresponding to "0" bits of information, and the amplifier (9) comprises:
a filter section (41) connected to the modulator (8) and configured to receive from the latter the modulated pulse train and increase an extinction ratio between the first segments and the second segments thereby producing a filtered signal;
one or more fibre combiners (44) connected to the filter configuration (41) and configured to receive from the latter the filtered signal and extract a first part of the filtered signal;
an amplification section (50) comprising a master oscillator power amplifier which is connected to the one or more combiners and is configured to receive from the latter a second part of the filtered signal and amplify it thereby producing an amplified pulse train, preferably the master oscillator power amplifier comprising a gain fibre (46) as a gain medium of the amplification stage, and/or the pulse generator (2) further comprising an endcap (49) connected to the master oscillator power amplifier for the emission via the endcap (49) of the amplified pulse train.

11. A transceiver according to any of the preceding claims, further comprising an optical head (51) which is optically coupled to the pulse generator (2) and to the receiver (3) and is configured to transmit and receive corresponding optical signals which are transmitted and received, respectively, by the transceiver when the latter is in operation.

12. A transceiver according to claim 11, wherein the optical head (51) comprises a first portion optically coupled to the pulse generator (2) and configured to receive the optical pulses generated by the pulse generator (2) and emit them, via a first aperture (55) of the optical head as an output beam towards outside the optical head (51), and the optical head (51) further comprises a second portion optically coupled to a detector (60) of the receiver (3) and configured for directing to the detector (60) an input beam received by the transceiver via a second aperture of the optical head; preferably the first portion comprising a first off-axis parabolic mirror (54) which is coupled to an endcap (49) of the pulse generator (2), and the second portion comprising a second off-axis parabolic mirror (57) which is coupled to the detector (60) of the receiver (3).

13. A transceiver according to any of claim 12-13, wherein the optical head (51) comprises a pointing and tracking system which is configured to controllably point the optical head towards different directions.

14. A transceiver according to any of the preceding claims, further comprising: a continuous wave (CW) optical source (11) configured to generate a CW optical signal; an optical switch (10), wherein the optical switch (10) is configured to optically connect the preamplifier (7) and the CW optical source (11) to the modulator (8); wherein the optical switch (10) is further configured to select between the CW optical signal and a pulsed optical signal formed by the pre-amplified pulses, and to pass the selected optical signal to the modulator (8).

15. A method for free-space optical communications, the method comprising:
generating seed optical pulses;
increasing the duration of the seed optical pulses thereby stretching the pulses;
increasing the power of the stretched pulses thereby pre-amplifying the pulses;
modulating at least one of the pre-amplified pulses thereby producing a modulated pulse train;
increasing a power of the modulated pulse train.
